# EUROPÄISCHE PATENTANMELDUNG

(11) **EP 1 241 047 A2**
(43) Veröffentlichungstag der Anmeldung: **18.09.2002**
(21) Anmeldenummer: 02002655.5
(22) Anmeldetag: 06.02.2002
(51) Int. Cl.: B60N 2/68

(54) **Rückenlehne für einen Fahrzeugsitz**

(30) Priorität: 12.03.2001 DE 10111653
(71) Anmelder: Bertrandt Ingenieurbüro GmbH, 50769 Köln (DE)
(72) Erfinder: Stellberg, Michael, Prof. Dr., 52428 Jülich (DE); Klefisch, Andrea, 41470 Neuss (DE); Zimmer, Dirk, 53925 Kall (DE); Erk, Daniel, 50939 Köln (DE)
(74) Vertreter: Hoeger, Stellrecht & Partner

(57) **Zusammenfassung**

Um eine Rückenlehne für einen Fahrzeugsitz mit zwei Seitenholmen und einer mindestens ein Rückenpolster tragenden Rückenstütze derart weiterzubilden, daß sie bei einem Heckaufprall einen verbesserten Insassenschutz ermöglicht, wird erfindungsgemäß vorgeschlagen, daß die Rückenstütze (18) höhenverstellbar ausgestaltet ist.

## Beschreibung

Die Erfindung betrifft eine Rückenlehne für einen Fahrzeugsitz mit zwei Seitenholmen und einer mindestens ein Rückenpolster tragenden Rükkenstütze.

Im Zusammenhang mit der zunehmenden Wichtigkeit des Insassenschutzes kommt der Ausgestaltung der Sitze von Kraftfahrzeugen eine wachsende Bedeutung zu. Um Verletzungen der Insassen bei einem Heckaufprall möglichst gering zu halten und insbesondere zum Schutz vor Verletzungen der Halswirbelsäule ist es von Vorteil, wenn die Rükkenlehne der Fahrzeugsitze im Schulter- und Kopfbereich einen möglichst geringen Abstand zum jeweiligen Insassen aufweisen. Hierzu sind Rückenlehnen bekannt mit einer Polsterung, deren Kontur an die Kontur eines Insassen angepaßt ist. Es wurde auch der Einsatz von verschwenkbaren und im Falle eines Heckaufpralles aufblasbaren Kopfstützen vorgeschlagen. Nachteilig an derartigen Ausgestaltungen der Rückenlehne ist es, daß diese nur an eine bestimmte Oberkörperlänge der Insassen angepaßt sind. Nimmt eine verhältnismäßig kleine oder eine verhältnismäßig große Person auf dem Fahrzeugsitz Platz, so weicht deren Kontur von der Kontur der Rückenlehne erheblich ab, so daß im Falle eines Heckaufpralles die Stützfunktion der Rückenlehne nicht in allen Fällen gewährleistet ist.

Aufgabe der vorliegenden Erfindung ist es, eine Rückenlehne der eingangs genannten Art derart weiterzubilden, daß sie bei einem Heckaufprall einen verbesserten Insassenschutz ermöglicht.

Diese Aufgabe wird bei einer Rückenlehne der gattungsgemäßen Art erfindungsgemäß dadurch gelöst, daß die Rückenstütze höhenverstellbar ausgestaltet ist. Die Höhenverstellung der Rückenstütze ermöglicht es, die Rückenlehne individuell an die jeweils Platz nehmende Person anzupassen. Dadurch kann insbesondere im Schulter- und Nackenbereich auch für verhältnismäßig kleine und verhältnismäßig große Personen eine sichere Abstützung gewährleistet werden.

Von besonderem Vorteil ist, wenn die Rückenstütze ein unteres, den Beckenbereich einer sitzenden Person abstützendes Stützteil sowie ein oberes, den Schulterbereich der sitzenden Person abstützendes Stützteil umfaßt, wobei das obere relativ zum unteren Stützteil höhenverstellbar gehalten ist. Die Rückenstütze weist folglich zwei relativ zueinander bewegbare Stützteile auf, wobei durch das untere Stützteil der Beckenbereich der sitzenden Person abgestützt werden kann und mittels des oberen Stützteiles im Falle eines Heckaufpralles insbesondere der Schulterbereich der Person zuverlässig abgestützt werden kann.

Um den Sitzkomfort zu verbessern und eine ergonomisch günstige Beckenposition mit einer optimierten Lendenwirbellordose zu gewährleisten, ist bei einer besonders bevorzugten Ausführungsform vorgesehen, daß sowohl das untere als auch das obere Stützteil höhenverstellbar gehalten sind. Dies ermöglicht es, die Rückenlehne nicht nur in ihrem Schulterbereich, sondern auch im Beckenbereich an die sitzende Person anzupassen.

Um die Höhenverstellung der Rückenstütze zu vereinfachen, ist es günstig, wenn die Rückenlehne eine Verstelleinrichtung umfaßt zum gleichzeitigen Verstellen des unteren und des oberen Stützteiles. Die Verstelleinrichtung kann hierbei elektromechanisch, hydraulisch oder pneumatisch betätigbar sein. Bei einer kostengünstig herstellbaren Ausführungsform ist eine mechanische Verstelleinrichtung vorgesehen, wobei die Verstelleinrichtung vorzugsweise manuell betätigbar ist.

Um die Geometrie der Rückenlehne an die Abmessungen und Form des Oberkörpers der sitzenden Person optimal anpassen zu können, hat es sich als vorteilhaft erwiesen, wenn das obere und das untere Stützteil um unterschiedliche Verstellwege verstellbar sind. Dies ermöglicht es beispielsweise, das untere Stützteil um einen verhältnismäßig geringen Verstellweg zu verstellen, während das obere Stützteil um einen beträchtlich längeren Verstellweg in der Höhe verstellbar ist.

Die Handhabung der Rückenlehne kann dadurch vereinfacht werden, daß die Verstellung des oberen Stützteiles über Getriebemittel mit einer Verstellung des unteren Stützteiles gekoppelt ist. Eine separate Verstellung des oberen und des unteren Stützteiles kann damit entfallen, vielmehr ist nur eine einzige Verstellung der Rückenstütze erforderlich, wobei mittels der Getriebemittel sichergestellt wird, daß eine Verstellung des oberen Stützteiles mit einer Verstellung des unteren Stützteiles gekoppelt ist.

Besonders günstig ist es, wenn der Verstellweg des oberen Stützteiles größer ist als der Verstellweg des unteren Stützteiles. Vorzugsweise ist der Verstellweg des oberen Stützteiles mindestens doppelt so groß wie der Verstellweg des unteren Stützteiles. Ein Verhältnis von etwa 1:3 für die Wege des unteren und des oberen Stützteiles hat sich als demographisch besonders günstig erwiesen. Eine Ausgestaltung der Getriebemittel dergestalt, daß der Verstellweg des oberen Stützteiles etwa dreimal so groß ist wie der Verstellweg des unteren Stützteiles ist folglich von Vorteil.

Bei einer bevorzugten Ausgestaltung der erfindungsgemäßen Rückenlehne ist vorgesehen, daß das obere Stützteil ein Schulterstützelement und ein Lendenstützelement umfaßt, wobei das Schulterstützelement relativ zum Lendenstützelement verschwenkbar ist um eine quer zur Längsrichtung der Seitenholme ausgerichtete Schwenkachse. Eine derartige Konstruktion ermöglicht es, die Rückenlehne nicht nur in ihrer Höhe an die jeweils Platz nehmende Person anzupassen, sondern bei einer Vergrößerung der Höhe der Rückenlehne kann zusätzlich das Schulterstützelement nach vorne in Richtung auf den Nackenbereich der sitzenden Person verschwenkt werden, so daß im Schulter- und Nackenbereich ein möglichst geringer Abstand zum jeweiligen Insassen erzielt und damit die Gefahr einer Verletzung bei einem Heckaufprall verringert werden kann.

Als vorteilhaft hat sich eine Ausgestaltung der Rückenlehne erwiesen, bei der die Verschwenkbewegung des Schulterstützelementes über Getriebemittel mit der Höhenverstellung der Rückenstütze gekoppelt ist. Dadurch kann auf einfach handhabbare Weise sichergestellt werden, daß eine Vergrößerung der Höhe der Rückenstütze mit einer Verschwenkbewegung des Schulterstützelementes nach vorne in Richtung auf die sitzende Person gekoppelt ist.

Günstig ist es, wenn die Rückenlehne eine integrierte Kopfstütze umfaßt. Letztere ist vorzugsweise am Schulterstützelement gehalten. Aufgrund der Höhenverstellbarkeit der Rückenstütze kann auch die Stellung der Kopfstütze optimal an die Oberkörperlänge der jeweils Platz nehmenden Person angepaßt werden.

Bei einer konstruktiv einfachen Ausgestaltung ist vorgesehen, daß die Rückenstütze in Längsrichtung der Seitenholme verschiebbar an den Seitenholmen gehalten ist. Die Seitenholme können in üblicher Weise mittels eines bekannten Schwenkmechanismus an ein Sitzelement eines Kraftfahrzeugsitzes montierbar sein.

Vorzugsweise weisen die Seitenholme ein Führungsteil auf, an dem die oberen und unteren Stützteile in Längsrichtung der Seitenholme verschiebbar gehalten sind. Das Führungsteil kann eine Kulissenplatte aufweisen mit mindestens einer Gleitführung, in der ein Kulissenstein verschiebbar ist, an dem das obere Stützteil vorzugsweise unverdrehbar gehalten ist.

Um sicherzustellen, daß der Höhenverstellung des oberen Stützteiles die Verschwenkbewegung des Schulterstützelementes überlagert ist, ist es günstig, wenn die Gleitführung eine gekrümmte Führungsbahn ausbildet. Die Gleitführung kann in ihrem dem oberen Endbereich der Rückenlehne zugewandten Endabschnitt in Richtung auf die sitzende Person nach vorne gekrümmt sein.

Um eine möglichst große mechanische Belastbarkeit der Rückenlehne sicherzustellen, ist es vorteilhaft, wenn die Kulissenplatte zwei in Längsrichtung der Seitenholme im Abstand zueinander angeordnete Gleitführungen aufweist, in denen ein Stützrahmen des oberen Stützteiles verschiebbar gehalten ist. Der Stützrahmen kann hierzu jeweils einem Seitenholm zugewandt zwei Rahmenteile aufweisen, die jeweils mittels eines Kulissensteins an einer der im Abstand zueinander angeordneten Gleitführungen gehalten sind.

Von Vorteil ist es, wenn der Stützrahmen das Schulterstützelement sowie ein Trägerteil zur Halterung der Kopfstütze ausbildet.

Das Lendenstützelement ist bei einer bevorzugten Ausführungsform der erfindungsgemäßen Rückenlehne am Stützrahmen - vorzugsweise verschwenkbar - gehalten und weist vorteilhafterweise eine schalenförmige Aufnahme für ein Lendenpolster auf.

Eine längsverschiebliche Halterung des unteren Stützteiles an den Seitenholmen kann dadurch erzielt werden, daß es mittels in Langlöcher eingreifender Führungsbolzen am Führungsteil der Seitenholme verschiebbar gehalten ist. Die Führungsbolzen sind vorzugsweise am Führungsteil festgelegt und greifen in am unteren Stützteil angeordnete Langlöcher ein.

Günstig ist es, wenn die Rückenlehne zur Höhenverstellung der Rükkenstütze eine - vorzugsweise manuell, beispielsweise mittels eines Schwenkhebels oder Drehknopfes betätigbare - Antriebsmechanik aufweist. Alternativ und/oder ergänzend kann eine elektromechanisch, pneumatisch oder hydraulisch betätigbare Antriebsmechanik zum Einsatz kommen.

Bei einer kostengünstig herstellbaren Ausgestaltung der Rückenlehne ist vorgesehen, daß die Antriebsmechanik zumindest ein Zahnstangentrieb umfaßt.

Bei einer bevorzugten Ausführungsform umfaßt die Antriebsmechanik zumindest ein Zahnradpaar mit zwei auf einer gemeinsamen Antriebswelle unverdrehbar gehaltenen Zahnrädern, die jeweils mit einer Zahnstange kämmen, wobei eine der Zahnstangen mit dem oberen Stützteil und die andere Zahnstange mit dem unteren Stützteil gekoppelt ist. Dies ermöglicht auf konstruktiv einfache Weise, durch Drehung der Antriebswelle gleichzeitig sowohl das obere als auch das untere Stützteil in der Höhe zu verstellen, wobei in Abhängigkeit von der Größe der jeweils zum Einsatz kommenden Zahnrädern beliebige Übersetzungsverhältnisse gewährleistet werden können, so daß insbesondere vorgesehen sein kann, daß eine Drehung der Antriebswelle einen größeren Verstellweg des oberen Stützteiles als des unteren Stützteiles zur Folge hat.

Bei einer besonders störungsunanfällig ausgestalteten Rückenlehne ist vorgesehen, daß die Antriebsmechanik zwei Zahnradpaare umfaßt, die jeweils an einem Seitenholm drehbar gehalten sind, wobei die beiden Zahnradpaare über Kopplungsglieder miteinander gekoppelt sind. Dies ermöglicht einen Gleichlauf der beiden Zahnradpaare, so daß beispielsweise durch Verschwenken eines einzigen Handgriffes eine gleichmäßige Verschiebe- und Verschwenkbewegung der Stützteile gewährleistet ist.

Bei einer konstruktiv einfachen Ausgestaltung ist vorgesehen, daß die Kopplungsglieder eine die beiden Seitenholme miteinander verbindene Kopplungswelle umfassen. Die Kopplungswelle kann den Seitenholme benachbart jeweils ein Zahnrad tragen, das mit einer mit der Bewegung des unteren und/oder des oberen Stützteiles gekoppelten Zahnstange kämmt.

Die nachfolgende Beschreibung einer bevorzugten Ausführungsform der Erfindung dient im Zusammenhang mit der Zeichnung der näheren Erläuterung. Es zeigen:
- Figur 1:: eine schaubildliche Darstellung eines Fahrzeugsitzes mit einer Rückenlehne in unterster Höhenstellung;
- Figur 2:: eine schaubildliche Darstellung des Fahrzeugsitzes gemäß Figur 1 mit der Rückenlehne in oberster Höhenstellung;
- Figur 3:: eine schematische Seitenansicht der Rückenlehne mit einer sich abstützenden Person;
- Figur 4:: eine schaubildliche Darstellung der Rückenlehne ohne Rückenpolster in unterster Höhenstellung.
- Figur 5:: eine schaubildliche Darstellung der Rückenlehne ohne Rückenpolster in oberster Höhenstellung;
- Figur 6:: eine Seitenansicht der Rückenlehne ohne Rückenpolster in unterster Höhenstellung;
- Figur 7:: eine Seitenansicht der Rückenlehne ohne Rückenpolster in oberster Höhenstellung;
- Figur 8:: eine Vorderansicht der Rückenlehne ohne Rückenpolster;
- Figur 9:: eine Schnittansicht längs der Linie 9-9 in Figur 8 in unterster Höhenstellung der Rückenlehne und
- Figur 10:: eine Schnittansicht längs der Linie 9-9 in Figur 8 in oberster Höhenstellung der Rückenlehne.

In der Zeichnung ist ein insgesamt mit dem Bezugszeichen 10 belegter Kraftfahrzeugsitz dargestellt mit einem Sitzteil 11 und einer Rückenlehne 12, die in üblicher Weise mittels einer an sich bekannten und deshalb in der Zeichnung nur schematisch dargestellten Schwenkmechanik 13 am Sitzteil 11 verschwenkbar gehalten ist.

Die Rückenlehne 12 weist zwei Seitenholme 14, 15 auf, die jeweils ein Seitenpolster 16 tragen, sowie eine insgesamt mit dem Bezugszeichen 18 belegte Rückenstütze, die zwischen den beiden Seitenholmen 14, 15 gehalten ist.

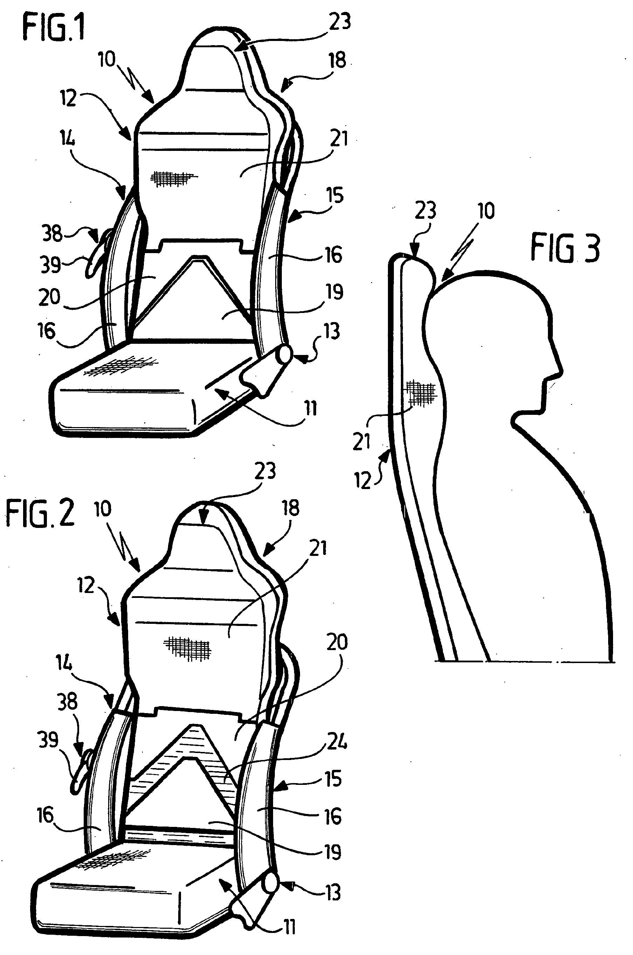

Die Rückenstütze 18 ist mehrteilig ausgestaltet und umfaßt ein im wesentlichen in Form eines gleichschenkligen Dreiecks ausgestaltetes Beckenpolster 19, an dessen beide Schenkel ein Lendenpolster 20 anschließt, welches wiederum an ein einstückig ausgebildetes Schulter-, Nacken- und Kopfpolster 21 angrenzt. Wie insbesondere aus Figur 3 deutlich wird, ist insbesondere die Kontur des Schulter-, Nacken- und Kopfpolsters 21 an die Kontur einer auf dem Kraftfahrzeugsitz 10 Platz nehmenden Person angepaßt. Die Polsterung der Rückenstütze 18 ist hierbei derart gewählt, daß im Bereich des Kopfes sowie im hinteren und unteren Bereich der Rückenstütze ein relativ steifer Polsterwerkstoff, vorzugsweise Schaumstoff, zum Einsatz kommt, während im Nacken- und Rückenbereich ein nachgiebigerer Polsterwerkstoff vorgesehen ist, wobei der Rückenbereich noch nachgiebiger ausgebildet ist als der Nackenbereich der Rückenstütze. Dadurch wird sichergestellt, daß im Falle eines Heckaufpralles die sitzende Person aufgrund ihrer Trägheit die unterschiedlich hart ausgebildeten Polsterwerkstoffe derart zusammendrückt, daß zum Zeitpunkt des Kopfkontaktes eine vollflächige Anlage der Person an der Rückenstütze gewährleistet ist, wie dies in Figur 3 schematisch dargestellt ist.

In die Rückenstütze 18 ist eine Kopfstütze 23 integriert, so daß der Kraftfahrzeugsitz 10 als sogenannter Integralsitz ausgebildet ist. Um die Höhe der Rückenstütze 18, insbesondere die Stellung des Schulter-Nacken- und Kopfpolsters 21, an die Länge des Oberkörpers der jeweils Platz nehmenden Person anzupassen, ist die Rückenstütze 18 in der Höhe kontinuierlich zwischen einer untersten und einer obersten Höhenstellung verstellbar, indem sowohl das Beckenpolster 19 als auch das Lendenpolster 20 und das Schulter-, Nacken- und Kopfpolster 21 verschiebbar an den Seitenholmen 14 und 15 gehalten sind. Das Lendenpolster 20 sowie das Schulter-, Nacken- und Kopfpolster 21 können hierbei in der Höhe um einen größeren Verstellweg verstellt werden als das Beckenpolster 19, so daß sich zwischen dem Beckenpolster 19 und dem Lendenpolster 20 ein im wesentlichen V-förmiger Zwischenraum 24 ausbildet, wenn die Rückenstütze 18 eine erhöhte Stellung einnimmt. Dieser Zwischenraum 24 kann mittels an sich bekannter und deshalb in der Zeichnung nicht dargestellter Faltenbälge kaschiert werden. Die V-förmige Ausgestaltung des Zwischenraumes 24 hat sich als besonders vorteilhaft erwiesen, um sicherzustellen, daß der Zwischenraum 24 von der sitzenden Person praktisch nicht wahrgenommen wird.

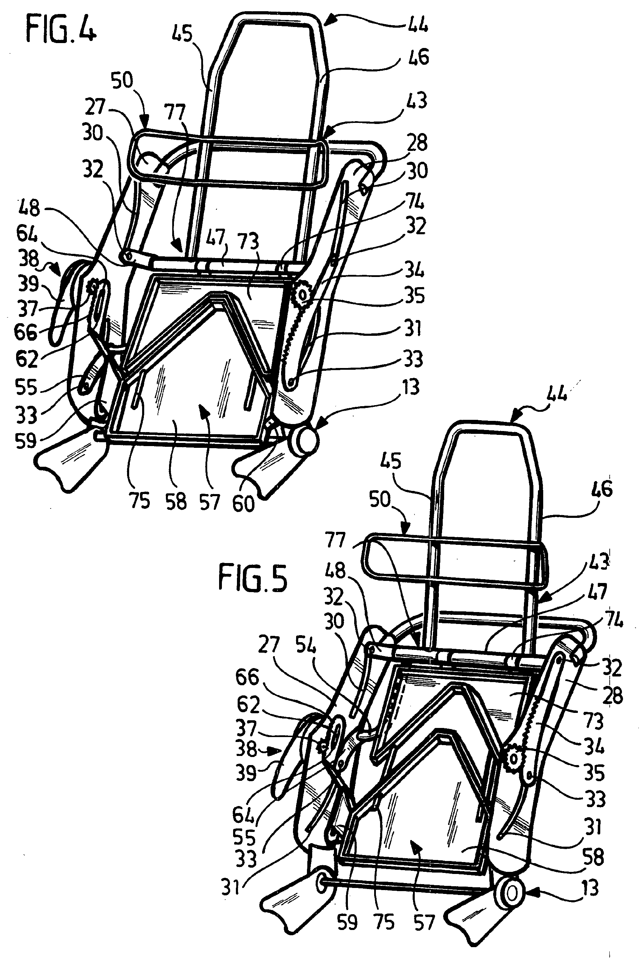

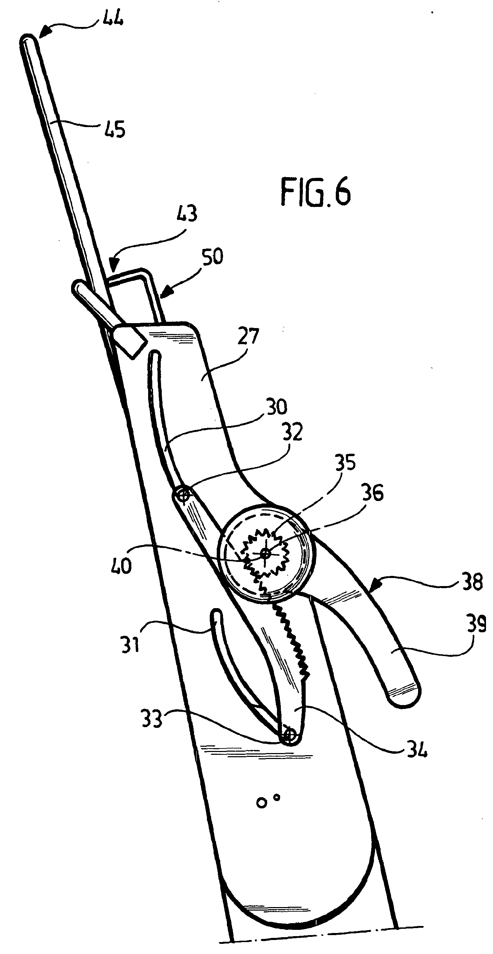

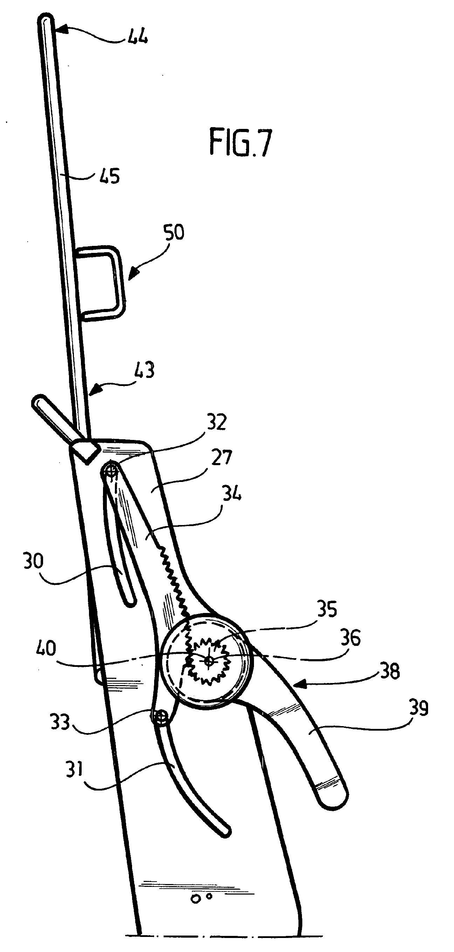

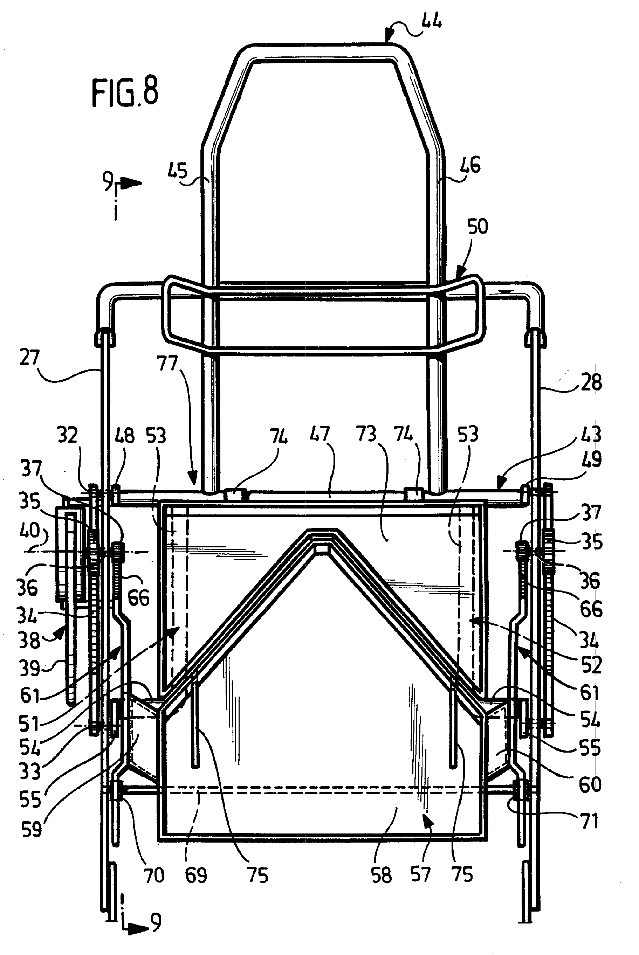

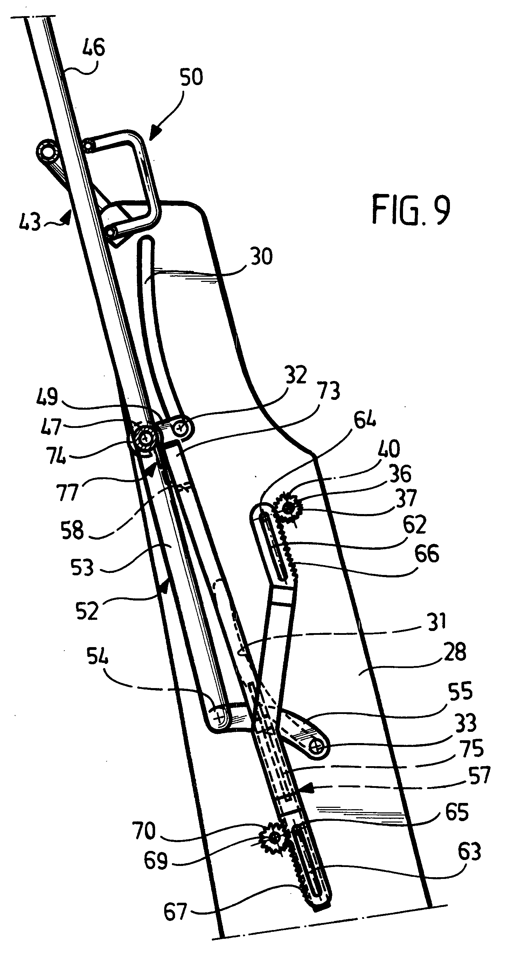

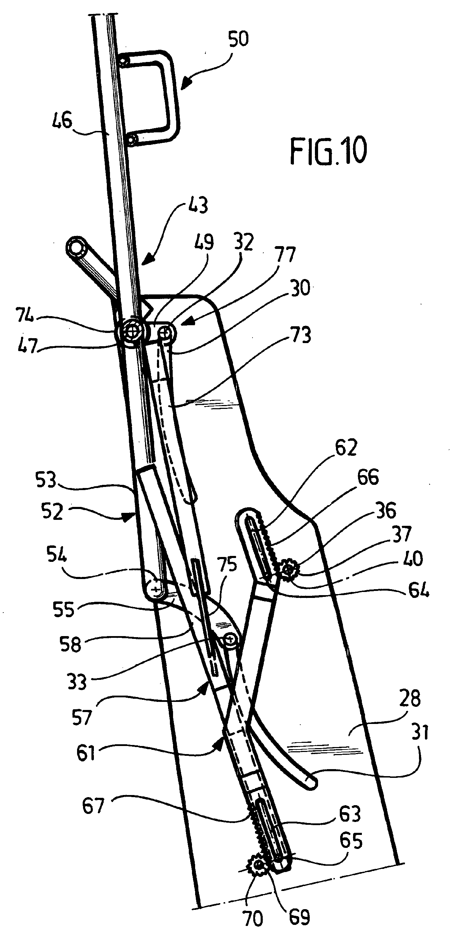

Die Stützstruktur und Verstellmechanik der Rückenlehne 12 wird nachfolgend unter Bezugnahme auf die Figuren 4 bis 10 näher erläutert, die die Rückenlehne nach Entfernung der Rücken- und Seitenpolster illustrieren. Wie insbesondere aus den Figuren 4 und 5 deutlich wird, weisen die beiden Seitenholme 14 und 15 jeweils eine Kulissenplatte 27 bzw. 28 auf mit zwei in Längsrichtung der Seitenholme 14, 15 im Abstand zueinander angeordneten, bogenförmig verlaufenden Gleitführungen 30 und 31, in denen jeweils ein Kulissenstein 32 bzw. 33 veschiebbar gehalten ist. Die Kulissensteine 32 und 33 sind auf der der Rückenstütze 18 abgewandten Außenseite der Kulissenplatten 27 bzw. 28 jeweils über eine Zahnstange 34 starr miteinander verbunden. Letztere kämmt mit einem äußeren Zahnrad 35, das auf der jeweiligen Außenseite der Kulissenplatten 27 bzw. 28 angeordnet und drehfest an einer die Kulissenplatte 27 bzw. 28 durchgreifenden Antriebswelle 36 festgelegt ist, die auf der der Rückenstütze 18 zugewandten Innenseite der jeweiligen Kulissenplatte 27 bzw. 28 ein inneres Zahnrad 37 trägt. Die drehbar an der Kulissenplatte 27 gehaltene Antriebswelle 36 trägt auf der Außenseite der Kulissenplatte 27 zusätzlich einen Schwenkhebel 38 mit einem Handgriff 39. Durch Verschwenken des Handgriffes 39 kann die an der Kulissenplatte 27 gehaltene Antriebswelle 36 um ihre Längsachse 40 verdreht werden.

Zwischen den beiden Kulissenplatten 27 und 28 ist ein Stützrahmen 43 angeordnet mit einem im wesentlichen U-förmigen Kopfbügel 44, dessen freie Schenkel 45 und 46 an einer Quertraverse 47 festgelegt sind, deren freie Enden 48 und 49 senkrecht nach vorne abgekröpft und jeweils an der Innenseite der Kulissenplatte 27 und 28 an einem Kulissenstein 32 unverdrehbar gehalten sind. Der Kopfbügel 44 trägt ungefähr in Längsrichtung der freien Schenkel 45 und 46 mittig eine verbreiterte Stütze 50.

Der Stützrahmen 43 umfaßt außerdem zwei im wesentlichen L-förmig ausgestaltete Stützbügel 51, 52, deren jeweils längerer Schenkel 53 mit seinem freien Ende an der Quertraverse 47 festgelegt ist und deren jeweils kürzerer Schenkel 54 mit seinem freien Ende über ein Zwischenstück 55 am Kulissenstein 33 der unteren Gleitführung 31 angelenkt ist. Der Stützrahmen 43 ist mittels der Kulissensteine 32 und 33 in Längsrichtung verschiebbar und aufgrund der Krümmung der Gleitführungen 30 und 31 zusätzlich um eine quer zur Längsrichtung der Seitenholme 14 und 15 ausgerichtete Schwenkachse verschwenkbar 33 an den Kulissenplatten 27 und 28 gehalten.

Unterhalb des Stützrahmens 43 ist zwischen den Kulissenplatten 27 und 28 ein unteres Stützteil 57 angeordnet mit einer schalenförmigen Beckenschale 58, von der jeweils einer Kulissenplatte 27 bzw. 28 zugewandt seitliche Haltelaschen 59 und 60 abstehen. An den freien Enden der Haltelaschen 59 und 60 ist jeweils eine Führungskulisse 61 festgelegt, die in Längsrichtung der Seitenholme 14 und 15 im Abstand zueinander angeordnete obere und untere Langlöcher 62 bzw. 63 aufweist, welche jeweils von einem an den Kulissenplatten 27 bzw. 28 festgelegten Führungsbolzen 64 bzw. 65 durchgriffen werden. Mittels der Langlöcher 62 und 63 und der kooperierenden Führungsbolzen 64 bzw. 65 ist das untere Stützteil 57 in Längsrichtung der Seitenholme 14 und 15 verschiebbar an den Kulissenplatten 27 und 28 gehalten.

In Höhe der oberen und unteren Langlöcher 62 und 63 ist die Führungskulisse 61 als obere bzw. untere Zahnstange 66, 67 ausgestaltet. Die obere Zahnstange 66 kämmt mit dem inneren Zahnrad 37, das drehfest auf der Antriebswelle 36 gehalten ist.

In ihrem dem Sitzteil 12 zugewandten unteren Bereich sind die beiden Kulissenplatten 27 und 28 über eine Querwelle 69 miteinander verbunden, an deren freien Enden jeweils ein Zahnrad 70 bzw. 71 drehfest gehalten ist, das mit der unteren Zahnstange 67 der Führungskulisse 61 kämmt.

Der Freiraum zwischen der Quertraverse 47 und der Beckenschale 58 wird von einer Lendenschale 73 überdeckt, die mittels Halteringe 74 verschwenkbar an der Quertraverse 47 gehalten ist. Die Lendenschale 73 weist außerdem Stützzapfen 75 auf, die sich in Längsrichtung verschiebbar am Boden der Beckenschale 58 abstützen.

Der Stützrahmen 43 bildet in Kombination mit der Lendenschale 73 ein oberes Stützteil 77 zur Halterung des Schulter-, Nacken- und Kopfpolsters 21 sowie des Lendenpolsters 20, während die Beckenschale 58 des unteren Stützteiles 57 das Beckenpolster 19 aufnimmt.

Soll zur Anpassung an eine Platz nehmende Person die Höhe der Rükkenstütze 18 verstellt werden, so wird hierzu der Handgriff 39 um die Schwenkachse 40 verschwenkt. Dies hat zur Folge, daß über das äußere Zahnrad 35 die auf der Außenseite der Kulissenplatten 27 und 28 angeordneten Zahnstangen 54 innerhalb der Gleitführungen 30 und 31 verschoben werden, so daß der Stützrahmen 43 des oberen Stützteiles 77 in Längsrichtung der Seitenholme 14 und 15 verschoben und gleichzeitig aufgrund der Krümmung der Gleitführung 30 und 31 der Stützrahmen 43 in Richtung auf das Sitzteil 14 nach vorne verschwenkt wird. Gleichzeitig werden über die inneren Zahnräder 37 und die oberen Zahnstangen 66 auch die Führungskulissen 61 und damit das untere Stützteil 57 in Längsrichtung der Stützholme 14 und 15 verschoben. Hierbei wird über die unteren Zahnstangen 67 und die zugeordneten Zahnräder 70 bzw. 71 in Kombination mit der Querwelle 69 ein Gleichlauf der an den beiden Kulissenplatten 27 und 28 gehaltenen äußeren und inneren Zahnrädern 35 und 37 sichergestellt. Durch Wahl des Übersetzungsverhältnisses zwischen den äußeren und inneren Zahnrädern 35 und 37 wird gewährleistet, daß beim Verschwenken des Handgriffes 39 das obere Stützteil 77 mit dem daran gehaltenen Kopf-, Nacken- und Schulterpolster 21 und dem Lendenpolster 20 um den dreifachen Verstellweg verstellt wird, um den das untere Stützteil 57 mit dem daran festgelegten Beckenpolster 19 verschoben wird.

## Patentansprüche

1. Rückenlehne für einen Fahrzeugsitz mit zwei Seitenholmen und einer mindestens ein Rückenpolster tragenden Rückenstütze, **dadurch gekennzeichnet, daß** die Rückenstütze (18) höhenverstellbar ausgestaltet ist.

2. Rückenlehne nach Anspruch 1, **dadurch gekennzeichnet, daß** die Rückenstütze (18) ein unteres, den Beckenbereich einer sitzenden Person abstützendes Stützteil (57) sowie ein oberes, den Schulterbereich der sitzenden Person abstützendes Stützteil (77) umfaßt, wobei das obere Stützteil (77) relativ zum unteren Stützteil (57) höhenverstellbar gehalten ist.

3. Rückenlehne nach Anspruch 2, **dadurch gekennzeichnet, daß** das untere Stützteil (57) und das obere Stützteil (77) höhenverstellbar gehalten sind.

4. Rückenlehne nach Anspruch 3, **dadurch gekennzeichnet, daß** die Rückenlehne (12) eine Verstelleinrichtung (34, 35, 36, 37, 66) umfaßt zum gleichzeitigen Verstellen des oberen Stützteiles (77) und des unteren Stützteiles (57).

5. Rückenlehne nach Anspruch 3 oder 4, **dadurch gekennzeichnet, daß** das obere Stützteil (77) und das untere Stützteil (57) um unterschiedliche Verstellwege verstellbar sind.

6. Rückenlehne nach einem der Ansprüche 3 bis 5, **dadurch gekennzeichnet, daß** die Verstellung des oberen Stützteiles (77) über Getriebemittel (34, 35, 36, 37, 66) mit einer Verstellung des unteren Stützteiles (57) gekoppelt ist.

7. Rückenlehne nach einem der Ansprüche 3 bis 6, **dadurch gekennzeichnet, daß** der Verstellweg des oberen Stützteiles (77) größer ist als der Verstellweg des unteren Stützteiles (57).

8. Rückenlehne nach einem der Ansprüche 3 bis 7, **dadurch gekennzeichnet, daß** der Verstellweg des oberen Stützteiles (77) etwa dreimal so groß ist wie der Verstellweg des unteren Stützteiles (57).

9. Rückenlehne nach einem der Ansprüche 2 bis 8, **dadurch gekennzeichnet, daß** das obere Stützteil (77) ein Schulterstützelement (44) und ein Lendenstützelement (73) umfaßt, wobei das Schulterstützelement (44) relativ zum Lendenstützelement (73) verschwenkbar ist um eine quer zur Längsrichtung der Seitenholme (14, 15) ausgerichtete Schwenkachse.

10. Rückenlehne nach Anspruch 9, **dadurch gekennzeichnet, daß** die Verschwenkbewegung des Schulterstützelementes (44) über Getriebemittel (54, 55) mit der Höhenverstellung der Rückenstütze (18) gekoppelt ist.

11. Rückenlehne nach einem der voranstehenden Ansprüche, **dadurch gekennzeichnet, daß** die Rückenlehne (12) eine integrierte Kopfstütze (23) umfaßt.

12. Rückenlehne nach Anspruch 11, **dadurch gekennzeichnet, daß** die Kopfstütze (23)am Schulterstützelement (44) gehalten ist.

13. Rückenlehne nach einem der voranstehenden Ansprüche, **dadurch gekennzeichnet, daß** die Rückenstütze (18) in Längsrichtung der Seitenholme (14, 15) verschiebbar an den Seitenholmen (14, 15) gehalten ist.

14. Rückenlehne nach einem der Ansprüche 2 bis 13, **dadurch gekennzeichnet, daß** die Seitenholme (14, 15) ein Führungsteil (27, 28) aufweisen, an dem das obere Stützteil (77) und das untere Stützteil (57) in Längsrichtung der Seitenholme (14, 15) verschiebbar gehalten sind.

15. Rückenlehne nach Anspruch 14, **dadurch gekennzeichnet, daß** das Führungsteil eine Kulissenplatte (27, 28) aufweist mit mindestens einer Gleitführung (30, 31), in der ein Kulissenstein (32, 33) verschiebbar ist, an dem das obere Stützteil (77) gehalten ist.

16. Rückenlehne nach Anspruch 15, **dadurch gekennzeichnet, daß** das obere Stützteil (77) unverdrehbar am Kulissenstein (32) fixiert ist.

17. Rückenlehne nach Anspruch 15 oder 16, **dadurch gekennzeichnet, daß** die Gleitführung (30, 31) eine gekrümmte Führungsbahn ausbildet.

18. Rückenlehne nach Anspruch 15, 16 oder 17, **dadurch gekennzeichnet, daß** die Kulissenplatte (27, 28) zwei in Längsrichtung der Seitenholme (14, 15) im Abstand zueinander angeordnete Gleitführungen (30, 31) äufweist, in denen ein Stützrahmen (43) des oberen Stützteiles (77) verschiebbar gehalten ist.

19. Rückenlehne nach Anspruch 18, **dadurch gekennzeichnet, daß** der Stützrahmen (43) das Schulterstützelement (50) sowie ein Trägerteil (44) zur Halterung der Kopfstütze (23) ausbildet.

20. Rückenlehne nach Anspruch 18 oder 19, **dadurch gekennzeichnet, daß** am Stützrahmen (43) das Lendenstützelement (73) gehalten ist.

21. Rückenlehne nach Anspruch 20, **dadurch gekennzeichnet, daß** das Lendenstützelement (73) eine schalenförmige Aufnahme für ein Lendenpolster (20) aufweist.

22. Rückenlehne nach einem der Ansprüche 14 bis 21, **dadurch gekennzeichnet, daß** das untere Stützteil (57) mittels in Langlöcher (62, 63) eingreifender Führungsbolzen (64, 65) am Führungsteil (27, 28) verschiebbar gehalten ist.

23. Rückenlehne nach Anspruch 22, **dadurch gekennzeichnet, daß** die Führungsbolzen (64, 65) am Führungsteil (27, 28) festgelegt sind und in am unteren Stützteil (57) angeordnete Langlöcher (62, 63) eingreifen.

24. Rückenlehne nach einem der voranstehenden Ansprüche, **dadurch gekennzeichnet, daß** die Rückenlehne (12) eine manuell betätigbare Antriebsmechanik (35, 36, 37) zur Höhenverstellung der Rückenstütze (18) aufweist.

25. Rückenlehne nach Anspruch 24, **dadurch gekennzeichnet, daß** die Antriebsmechanik zumindest einen Zahnstangentrieb (34, 35) umfaßt.

26. Rückenlehne nach Anspruch 24 oder 25, **dadurch gekennzeichnet, daß** die Antriebsmechanik zumindest ein Zahnradpaar (35, 37) umfaßt mit zwei auf einer gemeinsamen Antriebswelle (36) unverdrehbar gehaltenen Zahnrädern (35, 37), die jeweils mit einer Zahnstange (34, 66) kämmen, wobei eine der Zahnstangen (34) mit dem oberen Stützteil (77) und die andere Zahnstange (66) mit dem unteren Stützteil (57) gekoppelt ist.

27. Rückenlehne nach Anspruch 26, **dadurch gekennzeichnet, daß** die Antriebsmechanik zwei Zahnradpaare aufweist, die jeweils an einem Seitenholm (14, 15) drehbar gehalten und über Kopplungsglieder (69, 70, 71) miteinander gekoppelt sind.

28. Rückenlehne nach Anspruch 27, **dadurch gekennzeichnet, daß** die Kopplungsglieder eine die beiden Seitenholme (14, 15) miteinander verbindende Kopplungswelle (69) umfassen.
